# EUROPÄISCHE PATENTSCHRIFT

(11) **EP 2 191 713 B1**
(45) Veröffentlichungstag und Bekanntmachung des Hinweises auf die Patenterteilung: **07.06.2017**
(21) Anmeldenummer: 08020656.8
(22) Anmeldetag: 27.11.2008
(51) Int. Cl.: A01G 17/08

(54) **Agrarwitschaftllicher Verbinder**
Agricultural binding machine
Pince à lier agricole

(43) Veröffentlichungstag der Anmeldung: 02.06.2010
(73) Patentinhaber: Jho, Nam Sun, Suseong-gu Daegu (KR)
(72) Erfinder: Seo, Han Young, Daegu 706-853 (KR)
(74) Vertreter: RatnerPrestia

(56) Entgegenhaltungen:
- EP-A- 1 413 192
- WO-A-2007/023763
- DE-A1- 19 944 789

## Beschreibung

Die Erfindung bezieht sich auf einen agrarwirtschaftlichen Verbinder, anhand dessen man Trauben- bzw. Pflanzenstängel mit Stützen bzw. Halterungsschnüren verbinden kann.

Was herkömmliche Verbinder betrifft, entsteht eine unerwünschte Auflockerung im Verbinder bei dem Wechsel zu einem anderen Arbeitsort, während man den Verbinder trägt, weil der Operationshebel nicht festgehalten wird und somit die Höheneinrichtung geschwenkt wird. Dabei kann der Verbinder beschädigt werden. Darüber hinaus wird das Band, das durch die Zugnadel exakt eingezogen werden muss, bei dem Wechsel zum anderen Arbeitsort, indem man den Verbinder trägt, durch die Schwankung des Verbinders arbiträr entfaltet und somit entsteht die Auflockerung des Bandes. Hiermit muss man bei der Verbindungsarbeit das Band mühsam wieder einrollen und es kann öfter misslingen, das Band einzuziehen, weil:das Einzugsteil zerrissen wird, während man die Zugnadel ins Ende des Brandes zum Verbinden einsetzt, um das Band zum Verbinden einzuziehen. Darüber hinaus kann man öfters bei der Verbindungsarbeit andere Halterungsschnüre und Rastringe nicht verbinden.

Die DE 199 44 789 zeigt eine Bindemaschine für den Gartenbau, bei dem ein Führungsteil mit Schalteisennadeln in der Innenseite des Verbinderkörpers ausgebildet ist und die Schalteisennadeln von einer Feder in das Verbindungsteil an der geraden Kante einschiebbar sind, wobei unter den Schalteisennadeln eine Pressplatte angeordnet ist und auf der gegenüberliegenden oberen Seite ein Pressschlitz ausgebildet ist. Auf der Außenseite des Pressschlitzes sind ein Abschnittsraum und ein Warteraum für das Band angeordnet. Auf einer Seite des Verbinderkörpers ist ein Bandspeicher und gegenüber eine Bandzuführung mit Bandausgang angeordnet, die das Band in den Warteraum des Bandes zuführt. Auf der oberen Seite des Verbinderkörpers ist eine Hubvorrichtung angeordnet, die über eine Welle mit einem Handgriff verbunden ist. Die Hubvorrichtung umfasst eine Bandzugeinrichtung und eine Nadelbiegevorrichtung sowie eine Bandzugnadel, die mit einer Feder verbunden ist. Die Baugruppe einer Operationsplatte, einer Nadelplatte und einer Führungsplatte, sowie die Hubvorrichtung sind absenkbar ausgestaltet. Das Ende der Operationsplatte drückt einen Operationsvorsprung und die Bandzugnadel bewegt sich zum Inneren, wodurch die Nadel in das Ende des Bandes im Warteraum des Bandes einrastet und einen Rastring erzeugt, der mit den Schalteisennadeln verbunden werden kann. Der Operationshebel weist eine Stützrille und ein Rastteil auf, die zueinander einen Neigungswinkel aufweisen. Ferner ist eine Andruckfeder für die Nadelplatte in der Bandzugeinrichtung vorgesehen und die Andruckfeder mit einem Stützteil in engem Kontakt mit der Innenwand des Gehäuses steht und ferner einen Operationsteil und einen Rastteil umfasst, der an der Zugnadel eingerastet wird.

Eine Aufgabe der Erfindung ist es, die oben genannten Nachteile aufzulösen: durch Vermeidung einer Beschädigung des Verbinders bzw. eines unnötigen Verbrauchs von Band, die bei der Handhabung des Verbinders entstehen können, und durch Verhindern eines Zerreißens des Endes des Bandes zum Verbinden, die entstehen kann, indem man die Zugnadel am Band zum Verbinden auf der Bandzuführung einsetzt und es einzieht, und durch die Ausführung, wo die Verbindung zwischen dem Rastring aus dem Band zum Verbinden und den Halterungsschnüren bei der Verbindung der Pflanzenstängen mit der anderen Halterungsschnüren sicherer und exakter wird, wird die Verbindungsarbeit mehr verlässlich und effizient.

Die Aufgabe wird durch einen Agrarwirtschaftlichen Verbinder mit den Merkmalen des Anspruchs 1 gelöst. Weitere, die Erfindung ausgestaltende Merkmale sind in den Unteransprüchen vorhanden.

Um den oben genannten Zweck zu erreichen, wird das Sicherungsteil, das die Aktion des Operationshebels stillstehen lässt, zusätzlich zwischen dem Operationshebel und dem Verbinderkörper eingebaut und somit wurden die unnötige Schwankungen des Operationshebels und die darauf folgenden Auflockerung des Bandes vermieden. Nun kann man beim Verbinden des Bandes zum Verbinden die Verbindung zwischen Halterungsschnüren und Rastringen bequemer machen, indem man die Führungsrillen für die Halterungsschnur auf der Oberseite des Pressschlitzes für die Schalteisennadel aufgebaut hat, und darüber hinaus führt man den Aufbau so aus, dass die Zugnadel beim Ausziehen des Bandes zum Verbinden das Einzugsteil des durchzulaufenden Bandes zum Verbinden nicht zerreißt, indem man die Flexibilität der Zugnadel mehr elastisch macht.

Noch ausführlicher dargestellt, durch den Einbau des Sicherungsteils kann man bei dem Stillstand der Operation mit dem Verbinder den Operationshebel festhalten und die Auflockerung des Bandes zum Verbinden, die durch die unnötigen Operationen verursacht werden kann, zurückhalten: auf beiden Außenwänden bilden sich die Führungsrillen für die Halterungsschnüre aus, so dass die Halterungsschnüre, die die Oberseite des Pressschlitzes für die Schalteisennadel durchlaufen, in engem Kontakt mit der Oberseite des Pressschlitzes für die Schalteisennadel durchlaufen werden können. Hiermit kann man die Halterungsschnüre leichter verbinden, und dadurch, dass man die Flexibilität der Zugnadel mehr elastisch macht, um das Einzugsteil nicht zu zerreißen, während man die Zugnadel ins Ende des Bandes zum Verbinden einsetzt und es einzieht, wird der Verbinder sicherer.

In der wie oben genannten Erfindung setzt man die Halterungsschnüre (15) in die Stützrillen (13a) (13b) für die Halterungsschnüre ein, wenn man anhand von den Rastringen, die mit den ausgezogenen Bändern gemacht werden, Pflanzenstängel mit den Halterungsschnüren verbinden will. Anschließend zieht man das Band (20) mit dem im Warteraum des Bandes liegenden Zugnadeln für das Band ein und macht daraus einen Rastring (20a). Dann lässt man die Pflanzenstängel und Halterungsschnüre durch die Bedienung des Verbinders in die Innenseite des Rastrings hineinkommen, und stellt fest, ob die Halterungsschnüre in die Stützenrillen für die Halterungsschnüre hineingesetzt sind. Danach verbindet man mit dem Operationshebel das Verbindungsteil (20b) des Rastrings mit der Schalteisennadel. Nun läuft die Schalteisennadel durch die Halterungsschnur durch und verbindet die Verbindungsteile an beiden Enden des Rastrings. Somit wird das Verbindungsteil des Rastrings mit der Halterungsschnur zusammen verbunden und das Ausschnittmesser schneidet die Außenseite des Verbindungsteils ab. Damit wird der Verbindungsvorgang abgeschlossen. Hiermit wird das Verbindungsteil (20b) des Rastrings (20a) mit der Halterungsschnur verbunden und die beiden sind angeheftet, wenn man den Verbinder wegnimmt. Nun kann die Verbindungsstelle, die sich an den Halterungsschnüren nicht bewegt, die Pflanzenstängel umschließen, und daher ist die sichere Verbindung möglich. Hiermit kann man die Verbindungsarbeit, den Rastring mit der Halterungsschnur zu verbinden, noch effizienter ausführen.

Gemäß dieser Erfindung wird das Abdeckblech (14), an dem die Stützrillen ausgebildet werden, separat hergestellt: man kann diese Stützrillen als Mittel, mit dem man das Abdeckblech auf dem Führungsteil der Schalteisennadel im herkömmlichen Verbinder aufdecken und es festhalten kann, bezeichnen. Hiermit kann man das Abdeckblech gemäß dieser Erfindung auch für den herkömmlichen Verbinder einfach verwendet werden.

Gemäß dieser Erfindung wird eine Befestigungseinrichtung zwischen dem Operationshebel (4) und Verbinderkörper (1) angelegt. Hiermit gibt es in dieser Erfindung folgende Vorteile: man kann bei dem Wechsel zum anderen Arbeitsort, indem man den Verbinder trägt, unerwünschte Auflockerungen im Verbinder vermeiden, und den Verbinder bei der nächsten Arbeit schneller verwenden. Gemäß dieser Erfindung wird die Lagerung der Zugnadel elastischer, so dass die Zugnadel beim Ausziehen des Bandes zum Verbinden das Einzugsteil des durchzulaufenden Bandes zum Verbinden nicht zerreißt. Hiermit wird die Verlässlichkeit der Operation höher und die Arbeitsleistung des Verbinders auch höher.

Im Folgenden werden Ausführungsbeispiele der Erfindung anhand der beigefügten Zeichnungen näher erläutert. Dabei zeigen:
- Zeichnung 1:: eine Vorderansicht eines erfindungsgemäßen Ausführungsbeispiels;
- Zeichnung 2:: eine Hinteransicht eines erfindungsgemäßen Ausführungsbeispiels;
- Zeichnung 3:: ein Ausführungsbeispiel der Befestigungseinrichtung für den Operationshebel gemäß der Erfindung;
- Zeichnung 4:: eine ausführliche Seitenansicht der Bandzugeinrichtung gemäß der Erfindung;
- Zeichnungen 5 - 8:: Beispielzeichnungen für die Operation der Bandzugeinrichtung;
- Zeichnungen 9 - 13:: Ausführungsbeispiele für die Stützrille der Halterungsschnur gemäß der Erfindung.

In der Innenseite des Verbinderkörpers (1) bildet sich das Führungsteil der Schalteisennadel mit den Schalteisennadeln aus und die Schalteisennadel werden von der Feder (11) ins Verbindungsteils an der geraden Kante (3a) eingeschoben. Auf der unteren Seite in der senkrechten Richtung wird die Pressplatte für die Schalteisennadel (12) eingebaut und auf der demgegenüber stehenden oberen Seite bildet sich der Pressschlitz für die Schalteisennadel (3b) aus. So kann eine Schalteisennadel ausgeschoben werden und auf der Außenseite des Pressschlitzes sind der Abschnittsraum (3c) und der Warteraum des Bandes (8) eingebaut.

Auf der einen Seite des Bodens vom Verbinderkörper (1) steht der Bandspeicher (2a) und dem gegenüber die Bandzuführung (2) mit dem Bandausgang (2b). So führt das Band zum Verbinden (20) in den Warteraum des Bandes (8) zu.

Auf der oberen Seite des Verbinderkörpers (1) wird der Höhenförderer (5) mittels Welle (5a) mit dem Operationshebel (4) verbunden und an der geraden Kante des Höhenförderers (5) wird die Bandzugeinrichtung (6) eingebaut. Auf dem unteren Teil der Innenseite wird das Formgerät zum Abschneiden und Biegen der Schalteisennadel (5b) eingebaut. Die Bandzugnadel wird in der Bandzugeinrichtung mit der Feder (602), die die Nadelplatte (600) elastisch macht, verbunden. Ein Ende springt zur Außenseite der Zugeinrichtung vor und durch die Zusammensetzung der Operationsfeder (608), Führungsplatte (604) und Operationsplatte (603), die die Nadelplatte durch die Berührung mit dem Operationsvorsprung (100) in Bewegung setzt und sie wieder zurückstellt, wird die Höheneinrichtung abgesenkt. Durch diese Funktion drückt das Ende der Operationsplatte (603) den Operationsvorsprung und die Zugnadel wendet sich zum Inneren ein. Damit rastet die Nadel das Ende des Bandes im Warteraum des Bandes ein und macht daraus den Rastring (20a). Die beiden Enden des Rastrings werden von der Schalteisennadel (10) verbunden und die Außenseite des Verbindungsteils (20b) wird mit dem Ausschnittmesser (7) abgeschnitten. Hiermit kann man die Verbindungsarbeit immer wiederholen. In diesem Verbinder, bilden sich Leitwände an den beiden Außenseiten des Pressschlitzes (3b) für die Schalteisennadel aus. Und es gibt Führungseinrichtung, anhand der die Stützrillen (13a) (13b) der Halterungsschnüre die Halterungsschnur (15) über die obere Seite des Presschlitzes für die Schalteisennadel durchlaufen lässt. Ferner ist der Neigungswinkel zwischen der Führungsseite, die vom Rastteil (401) des Operationshebels (4) zur Stützrille (402) steht, und Neigungsseite, die vom Ende der Führungsseite zur Stützrille steht, 110 - 120°. Daher wird die Operation reibungslos ausgeführt, wenn der Höhenförderer (5) sich durch den Operationshebel (4) an das Verbindungsteil annähert und auf der Außenseite des Operationshebels bildet sich die Rastrille (403) aus. An einer Seite des Verbinderkörpers (1) wird die Einbauplatte (102) angehaftet und die Sicherungsplatte (102) eingebaut. An der Einbauplatte wird die Spiralfeder (103) eingebaut und mit dieser Feder wird das Rastteil (102a) der Sicherungsplatte (102) verbunden, damit das Rastteil zur Gegenrichtung von der Rastrille (403) des Operationshebel rotiert werden kann. An der Gegenseite des Rastteils wird der Griff (102a) angehaftet. Die Sicherungseinrichtung des Operationshebels, anhand der die Sicherungsplatte nun mit der Rastrille verbunden wird, und die Andruckfeder für die Nadelplatte (602) in der Bandzugeinrichtung (6) - diese Andruckfeder macht die Nadelplatte (600), worauf die Zugnadel (601) steht, elastisch - bilden das Stützteil (602a) an einem Teil des Gewindeteils. Das andere Teil macht das Stützteil (602a) länger und auf dem Teil steht die Andruckfeder, die zum Operationsteil (602b) mit Rastteil (602c) wird. Diese Andrucksfeder wird in die Stützstange (606) für die Feder, die auf der Innenseite des Gehäuses (6a) von der Bandzugeinrichtung (6) steht, eingefügt und das Stützteil (602a) steht in engen Kontakt mit der Innenwand des Gehäuses (6a). Das Operationsteil (602c) besteht aus der Andrucksfeder für die Nadelplatte, die an der Außenseite des Operationsteils von der Zugnadel (601) eingerastet wird.

Besonders, in der oben genannten Andruckfeder (602) wird die Länge des Operationsteils (602b) über doppelt länger als die des Stützteils (602a). Damit wird die Flexibilität mehr elastisch und der Einsetzwiderstand niedriger.

Die Sicherungsplatte (102), die den Operationshebel (4) festhält, wird auf der Einbauplatte (1a) in einem Teil des Verbinderkörpers (1) eingebaut. Der eine Teil der Spiralfeder (103), die in die Einbauplatte (1a) eingefügt wird, wird am Boden des Verbinderkörpers (1) festgehalten und der andere Teil der Spiralfeder (103) wird am Rastteil (102a) der Sicherungsplatte (102), die auf der Einbauplatte (1a) rotiert werden kann, eingerastet. Hiermit wird die Flexibilität der Sicherungsplatte (102) durch die Rückstellkraft der Spiralfeder (103) in die Gegenrichtung der Rastrille vom Operationshebel ausgeübt.

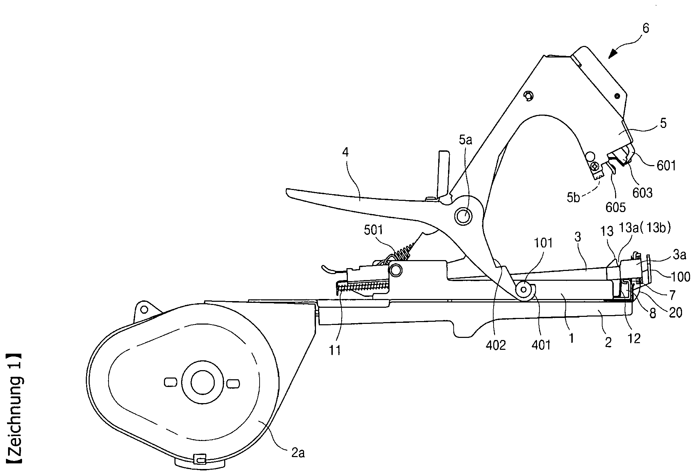

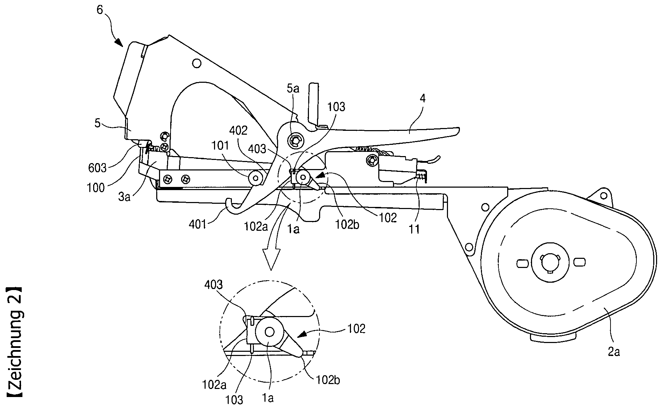

Die beigefügten Zeichnungen 1 und 2 sind Seitenansichten eines Ausführungsbeispiels der Erfindung. Auf der offenen Seite des Bodens vom Verbinderkörper (1) wird die Bandzuführung (2) mit Bandspeicher (2a) eingebaut. Auf der oberen Seite des Verbinderkörpers (1) wird das Führungsteil (3) für die Schalteisennadel eingebaut und wird zum Rastteil (3a) auf der geraden Kante. Auf der oberen Seite des Verbinderkörpers (1) werden der Andruckhebel (4) und der Höhenförderer (5) an der Welle (5a) eingebaut und an der geraden Kante des Höhenförderers (5) wird die Bandzugeinrichtung (6) eingebaut. Auf der Innenseite wird die Zugnadel (601) eingebaut und das Band zum Verbinden, das über die Bandzuführung (2) zugeführt wird, wird in den Rastteil (3a) ausgezogen. Mit dem Rastring, der aus diesem Band gemacht wird, wird die Verbindungarbeit ausgeführt. Mit dem Ausschnittmesser (7) wird die Außenseite des Rastteils vom Rastring abgeschnitten. So wird die Verbindung mit den Bändern ausgeführt.

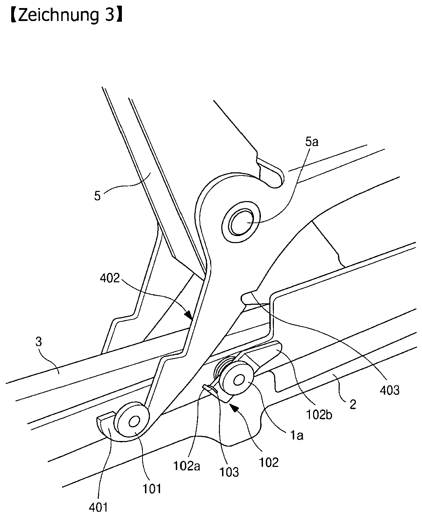

Wie aus der beigefügten Zeichnung 3 ersichtlich, wird das Rastteil (401) an der unteren Seite des Operationsteils im Operationshebel (4) ausgebildet und die Stützrille (402) oben auf diesem Rastteil (401). Der Neigungswinkel zwischen der Führungsseite, die vom Rastteil (401) des Operationshebels (4) zur Stützrille (402) steht, und Neigungsseite, die vom Ende der Führungsseite zur Stützrille steht, beträgt 110 - 120°. Wie in der Zeichnung gezeigt, neigt sich die Innenseite der Stützrille (402) mehr tiefer als die Außenseite. Daher bewegt sich die Vorsprungsrolle (101) entlang der Führungsseite und in die Innenseite wird die Stützrolle (402) hintereinander eingesetzt. Hiermit wird der Operationshebel sanfter betätigt, indem der Körper, der erhöht bzw. abgesenkt wird, schnell und flexibel verbunden wird.

Wie in der Zeichnung 3 dargestellt, steht auf einer Seite des Operationshebels (4) die Rastrille (403) und an einer Seite des Verbinderkörpers (1) wird die Einbauplatte (102) mit der Spiralfeder (103) angehaftet. Dann wird der Operationshebel (4) abgesenkt und das Rastteil (102a) der Sicherungsplatte (102) in die Rastrille (403) des Operationshebels (4) eingefügt. Daher kann der Operationshebel festgehalten werden.

Nämlich, wie in der Zeichnung gesehen, durch die Sicherungsplatte, die an der einen Seite des Verbinderkörpers (1) angehaftet wird, wird die Einbauplatte (1a) an der einen Seite des Verbinderkörpers (1) angehaftet, und ein Ende der Spiralfeder (103) wird am Boden des Verbinderkörpers (1) festgestellt. Das andere Ende (103a) der Spiralfeder (103) am Rastteil (102a) der Sicherungsplatte (102), das auf der Einbauplatte (1a) rotiert werden kann, wird eingerastet und damit wird die Sicherungsplatte (102) durch die Flexibilität in die Gegenrichtung von der Rastrille des Operationshebels rotiert.

So kann man bei keiner Verwendung des Verbinders bzw. beim Wechsel zum Arbeitsort den Rastzustand beibehalten werden und dieser Zustand wird bis Lockerung der Sicherungsplatte durch das Tieferlegen des Operationshebels beibehalten: wenn man, wie in der beigefügten Zeichnung 2, den Operationshebel (4) andrückt und hält, den Griff (102b) der Sicherungsplatte (102) manuell dreht, um das Rastteil (102a) der Sicherungsplatte (102) in die Rastrille (403) des Operationshebel (4) einzusetzen und den Griff loslässt, wird die Stelle durch die Rückstellkraft, die auf dem Operationshebel wirkt, und durch den Verbindungswinkel festgehalten, obwohl der Operationshebel sich in die Richtung vom Absinken zu drehen neigt.

Durch diese Funktion, die Operation des Verbinders zu blockieren, kann man die unnötigen Schwankungen des Verbinders beim Wechsel zum anderen Arbeitsort, indem man den Verbinder trägt, unterdrücken und Bewegungen bzw. Stöße der Teile vorbeugen. Darüber hinaus kann man auch unnötigen Verbrauch des Bandes zum Verbinden grundsätzlich vermeiden.

Wenn man die oben genannten Blockierung aufheben will, drückt man den Operationshebel (4) herunter. Wenn die Sicherungsplatte (102), die in der Rastrille (403) des Operationshebels (4) eingefügt ist durch die Rückstellkraft der Feder (103) wieder zur ursprünglichen Stelle zurückgebraucht wird, entsteht genügend Raum zwischen der Rastrille (403) und der Sicherungsplatte (102). Damit wird die Sicherungsplatte durch die Rückstellkraft der Spiralfeder (103) wieder zur ursprünglichen Stelle zurückgebracht und der Operationshebel erhöht sich. Nun wird die Blockierung einfach aufgehoben: somit kann man den Verbinder gleich wieder verwenden.

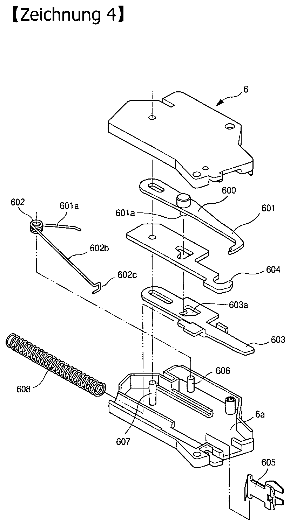

Was die Bandzugeinrichtung, die am Höhenförderer (5) eingebaut wird, betrifft, wie in der Zeichnung 4 aufgezeichnet, wird die Einbaustange (607) innerhalb des Gehäuses (6a) eingebaut. An der Einbaustange (603) wird die Operationsplatte (603), die Führungsplatte (604) und die Zugnadel (601) nacheinander eingesetzt: an der Stützstange (606) für die Feder, die innerhalb des Gehäuses(6a) einheitlich ausgebildet wird, wird die Andruckfeder für die Nadelplatte (602) eingesetzt und das Stützteil (602a), das am einen Ende ausgebildet wird, steht in engem Kontakt mit der einen Seite der Feder. Das Rastteil (602a), das sich am Operationsteil (602b) der Feder ausbildet, wird in die Außenseite der oben genannten Zugnadel (601) eingesetzt und dreht sich um die Einbaustange (607). So führt die Operation des Rastteils durch die Andruckfeder für die Nadelplatte (602) aus.

Dabei wird die Länge des Operationsteils (602b) in der Andruckfeder (602) für die Nadelplatte mehr als doppelt so lang wie die des Stützteils (602a). Wenn die Zugnadel (601) durch die Andruckfeder (602) für die Nadelplatte elastisch bewegt wird, wird die Kraft der Feder auf die Zugnadel (601), die vom Rastteil (602c) am Operationsteil Kraft aufnimmt, mehr flexibel ausgeübt und es wird verhindert, dass das Einsetzloch ausbricht, weil das Band zum Verbinden, das über die Bandzuführung (2) zugeführt wird, mit der Flexibilität eingesetzt wird. Hiermit kann man das Band zum Verbinden mehr exakt ausziehen. Hiermit wird die Verlässlichkeit der Operation höher und die Arbeitsleistung des Verbinders auch höher.

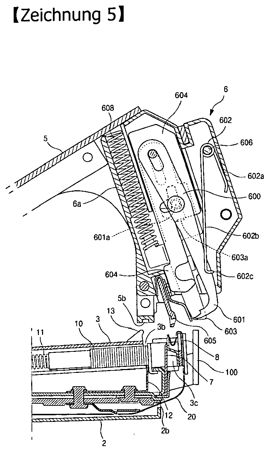

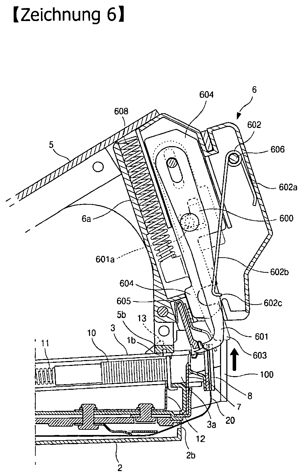

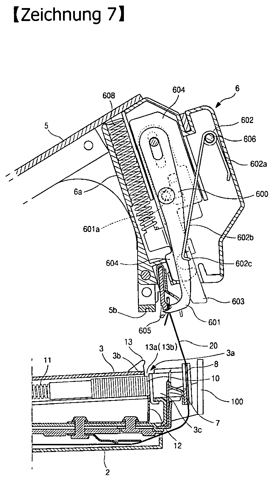

Die beigefügten Zeichnungen 5 bis 8 zeigen den Operationszustand des Verbinders gemäß der Erfindung. In der Vorbereitungsstufe in der Zeichnung 5, ist die Wellenstange (601a) der Zugnadel (601) an der oberen Schwelle des Operationslochs (603a), das in der Mitte der Operationsplatte (603) durch die Spiralfeder hervorragt, eingerastet. Und dann wird die Zugnadel (601) herabgesenkt, wenn die Operationsplatte, wie in der beigefügten Zeichnung 6, durch die Operation des Verbinders in die Operationseinrichtung erzwungen eingesetzt, indem die Wellenstange (601a) der Zugnadel (601), die an der oberen Schwelle des Operationslochs (603a) eingerastet ist, durch die Federkraft der Andruckfeder für die Nadelplatte (602) abgesenkt wird, und durch das Band durchgelaufen, weil die Zugnadel (601) auch herabgesenkt wird.

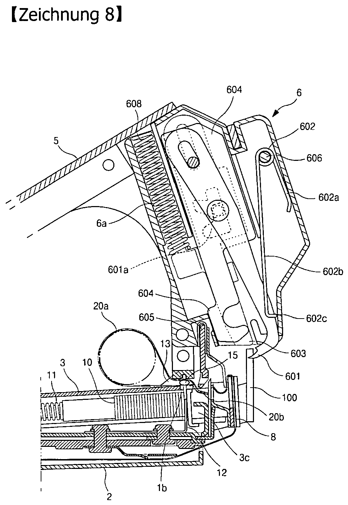

Nun wird das Band zum Verbinden, das über die Bandzuführung zugeführt wird, ausgezogen und verbunden. Wenn die Verbindungsaktion abgeschlossen ist, wie in der Zeichnung 8, werden die Operationsplatte (603) und die Führungsplatte (604) wieder zurückgestellt und bereiten auf die nächste Operation vor.

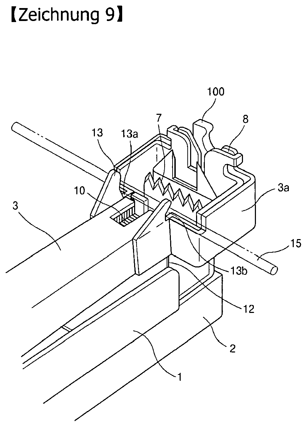

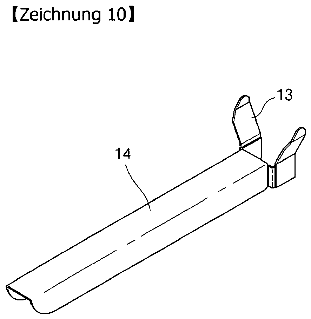

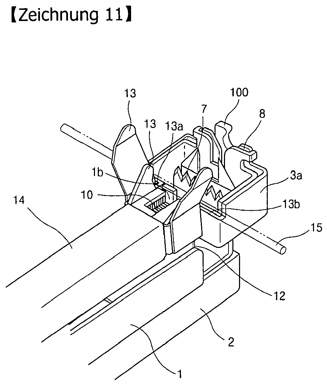

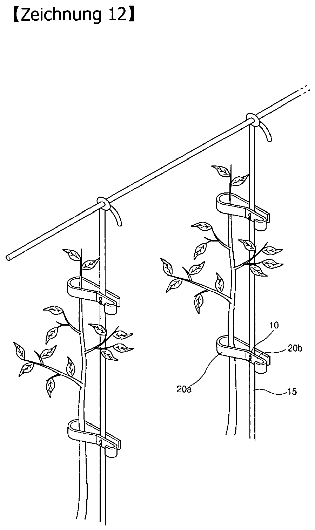

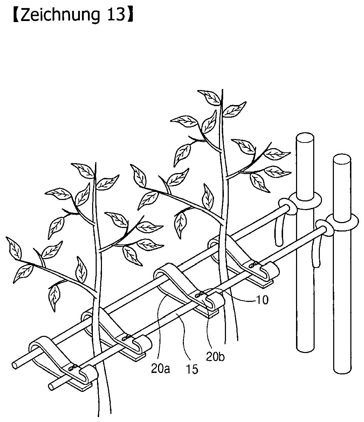

Die beigefügten Zeichnung 9 - 13 zeigen Ausführungsbeispiele für die Stützrille der Halterungsschnur gemäß der Erfindung.

Nämlich macht die Stützrille der Halterungsschnur Führungswände (13) an beiden Außenseiten des Pressschlitzes für die Schalteisennadel und die Halterungsschnur steht in engen Kontakt mit der oberen Seite des Pressschlitzes (3b) für die Schalteisennadel und läuft anhand der Stützrillen (13a) (13b) durch sie durch.

Daher leiten Führungsrillen (13a) (13b) gemäß der Erfindung, wenn die Halterungsschnur in dir Stützrille eingesetzt wird und die Stelle der Halterungsschnur in engen Kontakt mit der oberen Seite des Pressschlitzes für die Schalteisennadel durch läuft und die Eisennadel in dieser Stelle verbunden wird, die Eisennadel durch die Mitte der Halterungsschnur. Hiermit werden die Halterungsschnur und das Band zum Verbinden eins verbunden.

Gemäß der Erfindung gibt es auch das Abdeckblech (14), mit dem die Stützrillen (13a) (13b) der Halterungsschnur auf der Außenseite des Führungsteils (3) für die Schalteisennadel aufgedeckt wird, damit die Führungswand (13) auf beiden Seiten der gerade Kante vom Abdeckblech gemacht und die Stützrillen (13a) (13b) der Halterungsschnur ausgebildet wird.

Darstellung der wichtigsten Namen in den Zeichnungen

| | | | | | |
|---|---|---|---|---|---|
| 1 : | Verbinderkörper | | | 100 | :Operationsvorsprunge |
| 102: | Sicherungsplatte | | | 102a, 401 : | Rastteil |
| 102b: | Griff | | | | |
| 103: | Spiralfeder | | | | |
| 2: | Bandzuführung | | | 3 : | Führungsteil für die Schalteisennadel |
| 3b : | Pressschlitz für die Schalteisennadel | | | | |
| 3a : | Verbindungsteil | | | | |
| 4 : | Operationshebel | | | 402: | Stützrille |
| 403: | Rastrille | | | | |
| 5: | Höhenförderer | | | | |
| 5a : | Welle | | | | |
| 6: | Bandzugeinrichtung | | | | |
| 600: | Nadelplatte | | | 601: | Bandzugnadel |
| 601a : | Wellenstange | | | 602 : | Andruckfeder für die Nadelplatte |
| 602a : | Stützteil | | | 602b : | Operationsteil |
| 602c: | Rastteil | | | | |
| 603 : | Operationsplatte | | | | |
| 603a : | Operationsloch | | | 604 : | Führungsplatte |
| 606 : | Stützstange für die Feder | 607 : Einbaustange | | | |
| 7: | Ausschnittmesser | | | 8 : | Warteraum des Bandes |
| 10: | Schalteisennadel | | | 11 : | Feder |
| 12 : | Pressschlitz für die Schalteisennadel | | | | |
| 13: | Leinwand | | | | |
| 13a,13b : | Stützrille für die Halterungsschnur | | | | |
| 14: | Abdeckblech | | | | |
| 14a : | Befestigungsrille | | | | |
| 14b: | Verbundelement | | | | |
| 15: | Halterungsschnur | | | | |
| 20a : | Rastring | | | | |
| 20b : | Verbindungsteil für den Rastring | | | | |

## Patentansprüche

1. Agrarwirtschaftlicher Verbinder, bei dem ein Führungsteil (3) der Schalteisennadel mit den Schalteilsennadeln (10) in der Innenseite des Verbinderkörpers (1) ausgebildet ist und die Schalteisennadel von einer Feder (11) in das Verbindungsteil an der geraden Kante (3a) einschiebar ist, wobei auf der unteren Seite in der senkrechten Richtung die Pressplatte (12) für die Schalteisennadel eingebaut ist und auf der gegenüber liegenden oberen Seite ein Pressschlitz (3b) für die Schalteisennadel ausgebildet ist, so dass eine Schalteisennadel ausgeschoben werden kann und auf der Außenseite des Pressschlitzes ein Abschnittsraum (3c) und ein Warteraum (8) des Bandes angeordnet sind;
wobei auf der einen Seite des Bodens vom Verbinderkörper (1) ein Bandspeicher (2a) und demgegenüber die Bandzuführung (2) mit dem Bandausgang (2b) angeordnet ist, so dass das Band (20) zum Verbinden in den Warteraum des Bandes (8) zuführbar ist;
wobei auf der oberen Seite des Verbinderkörpers (1) der Höhenförderer (5) mittels Welle (5a) mit dem Operationshebel (4) verbunden ist und an einer geraden Kante des Höhenförderers (5) eine Bandzugeinrichtung (6) eingebaut ist, wobei auf dem unteren Teil der Innenseite das Formgerät (5b) zum Abschneiden und Biegen der Schalteisennadel eingebaut ist, und eine Bandzugnadel (601) einer Nadelplatte (600) in der Bandzugeinrichtung (6) mit der Feder (602), die die Nadelplatte (600) elastisch lagert, verbunden ist, wobei ein Ende zur Außenseite der Bandzugeinrichtung (6) vorspringt und die Zusammensetzung der Operationsfeder (608), Führungsplatte (604) und Operationsplatte (603), die die Nadelplatte (600) durch die Berührung mit einem Operationsvorsprung (100) in Bewegung setzt und sie wieder zurückstellt, und die Höheneinrichtung absenkbar sind, wobei das Ende der Operationsplatte (603) den Operationsvorsprung (100) drückt und die Bandzugnadel (601) sich zum Inneren einwendet, wodurch die Nadel in das Ende des Bandes im Warteraum (8) des Bandes einrastet und daraus den Rastring (20a) erzeugt, wobei die beiden Enden des Rastrings mit der Schalteisennadel (10) verbindbar sind und die Außenseite des Verbindungsteils (20b) mit dem Ausschnittmesser (7) abschneidbar ist, wodurch die Verbindungsarbeit wiederholbar ist;
wobei in diesem Verbinder sich Leitwände (13) an den beiden Außenseiten des Pressschlitzes (3b) für die Schalteisennadel ausbilden und es eine Führungseinrichtung mit Stützrillen (13a, 13b) gibt, mit deren Hilfe eine Halterungsschnur (15) über die obere Seite des Pressschlitzes (3b) für die Schalteisennadel durchläuft;
wobei ferner ein Neigungswinkel zwischen einer Führungsseite, die von einem Rastteil (401) des Operationshebels (4) zur Stützrille (402) steht, und der Neigungsseite, die vom Ende der Führungsseite zur Stützrille steht, 110 - 120° ist, wodurch die Operation reibungslos ausführbar ist, wenn der Höhenförderer (5) sich durch den Operationshebel (4) an das Verbindungsteil annähert und auf der Außenseite des Operationshebels die Rastrille (403) ausgebildet ist, wobei an einer Seite des Verbinderkörpers (1) eine Einbauplatte (1a) angehaftet und die Sicherungsplatte (102) eingebaut ist;
wobei an der Einbauplatte (1a) die Spiralfeder (103) eingebaut ist und mit dieser Feder das Rastteil (102a) der Sicherungsplatte (102) verbunden ist, damit das Rastteil zur Gegenrichtung von der Rastrille (403) des Operationshebels rotierbar ist, wobei an der Gegenseite des Rastteils der Griff (102b) angehaftet ist;
wobei die Andruckfeder (602) für die Nadelplatte (600) in der Bandzugeinrichtung (6) die Nadelplatte (600), auf der die Zugnadel (601) steht, elastisch macht, und das Stützteil (602a) an einem Teil des Gewindeteils ausbildet, wobei das zum Stützteil (602a) andere Teil der Andruckfeder (602), der den Operationsteil (602b) mit Rastteil (602c) ausbildet, länger ist, wobei die Andruckfeder (602) in die Stützstange (606) für die Feder, die auf der Innenseite des Gehäuses (6a) von der Bandzugeinrichtung (6) steht, eingefügt ist und das Stützteil (602a) in engen Kontakt mit der Innenwand des Gehäuses (6a) steht, und wobei das Operationsteil, an der Außenseite des Operationsteils von der Zugnadel (601) eingerastet wird.

2. Agrarwirtschaftlicher Verbinder nach Anspruch 1, wobei die Sicherungsplatte (102), die den Operationshebel (4) festhält, auf der Einbauplatte (1a) in einem Teil des Verbinderkörpers (1) eingebaut ist; ein Teil der Spiralfeder (103), die in die Einbauplatte (1a) eingefügt ist, am Boden des Verbinderkörpers (1) festgehalten ist und der andere Teil der Spiralfeder (103) am Rastteil (102a) der Sicherungsplatte (102), die auf der Einbauplatte (1a) rotierbar ist, eingerastet ist, wodurch die Flexibilität der Sicherungsplatte (102) durch die Rückstellkraft der Spiralfeder (103) in die Gegenrichtung der Rastrille vom Operationshebel ausgeübt wird.

3. Agrarwirtschaftlicher Verbinder nach Anspruch 1, ferner umfassend ein Abdeckblech (14), das die Stützrillen (13a) (13b) der Halterungsschnur auf der Außenseite des Führungsteils (3) für die Schalteisennadel aufgedeckt wird, damit der Führungswand (13) auf der beiden Seiten der gerade Kante vom Abdeckblech gemacht und die Stützrillen (13a) (13b) der Halterungsschnur ausgebildet wird.

## Claims

1. Agricultural binding tool, in which a guide part (3) of the staples is formed with the staples (10) inside the binding tool body (1) and the staple can be pushed into the binding part on the straight edge (3a) by a spring (11), wherein the pressing plate (12) for the staple is incorporated on the lower side in the perpendicular direction and a pressing slot (3b) for the staple is formed on the opposite upper side, with the result that a staple can be pushed out and a cutting space (3c) and a holding space (8) of the tape are arranged on the outside of the pressing slot;
wherein a tape storage unit (2a) is arranged on one side of the floor of the binding tool body (1) and the tape feed (2) with the tape outlet (2b) is arranged opposite this, with the result that the tape (20) can be fed into the holding space of the tape (8) for the binding;
wherein on the upper side of the binding tool body (1) the elevator (5) is connected to the operating lever (4) by means of a shaft (5a) and a tape-drawing device (6) is incorporated on a straight edge of the elevator (5), wherein the shaping device (5b) for cutting and bending the staple is incorporated on the lower part of the inside, and a tape-drawing needle (601) of a needle plate (600) in the tape-drawing device (6) is connected to the spring (602), which elastically supports the needle plate (600), wherein one end protrudes towards the outside of the tape-drawing device (6) and the combination of operating spring (608), guide plate (604) and operating plate (603), which sets the needle plate (600) in motion by contact with an operating protrusion (100) and resets it, and the elevation device can be lowered, wherein the end of the operating plate (603) presses the operating protrusion (100) and the tape-drawing needle (601) turns inwards, whereby the needle engages in the end of the tape in the holding space (8) of the tape and produces the catching ring (20a) from it, wherein the two ends of the catching ring can be connected to the staple (10) and the outside of the binding part (20b) can be cut with the cutting blade (7), whereby the binding work can be repeated;
wherein in this binding tool guide walls (13) are formed on both outer sides of the pressing slot (3b) for the staple and there is a guide device with support grooves (13a, 13b), with the aid of which a support twine (15) passes through over the upper side of the pressing slot (3b) for the staple;
wherein furthermore an angle of inclination between a guide side, which extends from a catching part (401) of the operating lever (4) to the support groove (402), and the inclination side, which extends from the end of the guide side to the support groove, is 110 - 120°, whereby the operation can be carried out smoothly when the elevator (5) approaches the binding part by means of the operating lever (4) and the catching groove (403) is formed on the outside of the operating lever, wherein a mounting plate (1a) is adhered to a side of the binding tool body (1) and the locking plate (102) is incorporated;
wherein the coil spring (103) is incorporated on the mounting plate (1a) and the catching part (102a) of the locking plate (102) is connected to this spring, so that the catching part can be rotated in the opposite direction to the catching groove (403) of the operating lever, wherein the handle (102b) is adhered to the opposite side of the catching part;
wherein the pressure spring (602) for the needle plate (600) in the tape-drawing device (6) makes the needle plate (600), on which the drawing needle (601) is located, elastic, and forms the support part (602a) on a part of the threaded portion, wherein the part of the pressure spring (602) other than the support part (602a), which forms the operating part (602b) with the catching part (602c), is longer, wherein the pressure spring (602) is inserted into the support bar (606) for the spring, which is located on the inside of the housing (6a) of the tape-drawing device (6), and the support part (602a) is in close contact with the internal wall of the housing (6a), and wherein the operating part is engaged on the outside of the operating part of the drawing needle (601).

2. Agricultural binding tool according to claim 1, wherein the locking plate (102), which holds the operating lever (4), is incorporated on the mounting plate (1a) in a part of the binding tool body (1); one part of the coil spring (103), which is inserted into the mounting plate (1a), is held on the floor of the binding tool body (1) and the other part of the coil spring (103) is engaged on the catching part (102a) of the locking plate (102), which can be rotated on the mounting plate (1a), whereby the flexibility of the locking plate (102) is exerted in the opposite direction to the catching groove by the operating lever due to the resetting force of the coil spring (103).

3. Agricultural binding tool according to claim 1, furthermore comprising a cover plate (14), which covers the support grooves (13a) (13b) of the support twine on the outside of the guide part (3) for the staple, so that the guide wall (13) is made on both sides of the straight edge of the cover plate and the support grooves (13a) (13b) of the support twine are formed.

## Revendications

1. Pince à lier agricole, dans lequel une pièce de guidage (3) des agrafes est agencée avec les agrafes (10) dans la face interne du corps de la pince (1), et l'agrafe peut être poussée par un ressort (11) dans la pièce de liage à l'arête droite (3a), le plateau de presse (12) pour l'agrafe étant monté sur la face inférieure dans le sens perpendiculaire et une encoche de presse (3b) pour ladite agrafe étant agencée sur la face supérieure opposée de telle sorte qu'une agrafe peut en être repoussée, et qu'un espace de section (3c) et un espace d'attente (8) de la bande sont agencés sur la face externe de l'encoche de presse ;
un réservoir de bande (2a) étant agencé sur ladite une face du fond du corps de la pince (1) et, en face, l'entrée de bande (2) avec la sortie de bande (2b), de telle sorte que la bande (20) peut être amenée dans l'espace d'attente de la bande (8) pour le liage ;
le transporteur vertical (5) étant, sur la face supérieure du corps de la pince (1), relié par un axe (5a) au levier opérateur (4), et un dispositif de traction de bande (6) étant monté à une arête droite du transporteur vertical (5), l'appareil de formage (5b) pour sectionner et plier l'agrafe étant monté sur la partie inférieure de la face interne, et une aiguille de traction de bande (601) d'une plaque de l'aiguille (600) étant reliée, dans le dispositif de traction de bande (6), au ressort (602) qui soutient de manière élastique la plaque de l'aiguille (600), une extrémité dépassant en saillie de la face externe du dispositif de traction de bande (6), et l'assemblage ressort d'actionnement (608), plateau de guidage (604) et plateau d'opération (603), qui met en mouvement la plaque de l'aiguille (600) par contact avec une saillie d'opération (100) et la remet en position initiale, ainsi que le dispositif d'étirage vertical pouvant être abaissés, tandis que l'extrémité du plateau d'opération (603) fait pression sur la saillie d'opération (100) et que l'aiguille de traction de bande (601) se retourne vers l'intérieur, l'aiguille venant s'enclencher dans l'extrémité de la bande dans l'espace de repos (8) de la bande et générant ainsi l'anneau d'encliquetage (20a), les deux extrémités dudit anneau d'encliquetage pouvant être raccordées à l'agrafe (10) et la face externe de la pièce de liaison (20b) pouvant être coupée par le couteau de découpe (7), ce qui permet de répéter le travail de liage ;
des cloisons de guidage (13) se formant dans cette pince aux deux faces externes de l'encoche de presse (3b) pour l'agrafe et un dispositif de guidage à rainures de soutien (13a, 13b) étant présent, lequel permet de faire passer une ficelle de liage (15) par-dessus la face supérieure de l'encoche de presse (3b) pour l'agrafe ;
de plus, un angle d'inclinaison entre une face de guidage, allant d'une pièce d'encliquetage (401) du levier opérateur (4) à la rainure de soutien (402), et la face d'inclinaison, allant de l'extrémité de la face de guidage à la rainure de soutien, étant de 110 à 120°, ce qui permet d'effectuer l'opération sans problème lorsque le transporteur vertical (5) se rapproche de la pièce de liage par le biais du levier opérateur (4) et que la rainure d'encliquetage (403) est formée sur la face externe du levier opérateur, tandis qu'une plaque de montage (1a) adhère à une face du corps de la pince (1) et que la platine de fixation (102) y est montée ;
le ressort à boudin (103) étant monté sur la plaque de montage (1a) et la pièce d'encliquetage (102a) de la platine de fixation (102) étant reliée audit ressort de telle sorte que la pièce d'encliquetage puisse être mise en rotation dans le sens opposé à la rainure d'encliquetage (403) du levier opérateur, la poignée (102b) adhérant à la face opposée de la pièce d'encliquetage ;
le ressort de pression (602) pour la plaque de l'aiguille (600) dans le dispositif d'étirage de bande (6) rendant élastique la plaque de l'aiguille (600) sur laquelle est placée l'aiguille de traction (601), et formant la pièce de soutien (602a) à une partie du filetage, l'autre partie du ressort de pression (602) autre que la pièce de soutien (602a), qui forme la pièce opératrice (602b) à pièce d'encliquetage (602c), étant plus longue, le ressort de pression (602) étant inséré dans la tige de soutien (606) pour le ressort qui se tient sur la face interne du boîtier (6a) du dispositif d'étirage de bande (6), et la pièce de soutien (602) étant en contact étroit avec la paroi interne du boîtier (6a), tandis que la pièce opératrice est enclenchée dans la face externe de la pièce opératrice de l'aiguille de traction (601) .

2. Pince à lier agricole selon la revendication 1, la platine de fixation (102) qui maintient le levier opérateur (4) étant montée sur la plaque de montage (1a) dans une partie du corps de la pince (1) ; une partie du ressort à boudin (103), qui est inséré dans la plaque de montage (1a), étant fixée au fond du corps de la pince (1) et l'autre partie du ressort à boudin (103) étant enclenchée dans la pièce d'encliquetage (102a) de la platine de fixation (102) qui peut être mise en rotation sur la plaque de montage (1a), ce qui permet d'exercer la souplesse de la platine de fixation (102) au moyen de la force de rappel du ressort à boudin (103) dans le sens opposé de la rainure d'encliquetage du levier opérateur.

3. Pince à lier agricole selon la revendication 1, comprenant de plus un couvercle en tôle (14) couvrant les rainures de soutien (13a) (13b) de la ficelle de liage sur la face externe de la pièce de guidage (3) pour l'agrafe, de telle sorte que la paroi de guidage (13) soit réalisée des deux côtés de l'arête droite du couvercle en tôle, et que les rainures de soutien (13a) (13b) de la ficelle de liage soient formées.
